# EUROPÄISCHE PATENTSCHRIFT

(11) **EP 3 727 781 B1**
(45) Veröffentlichungstag und Bekanntmachung des Hinweises auf die Patenterteilung: **29.03.2023**
(21) Anmeldenummer: 18786280.0
(22) Anmeldetag: 11.10.2018
(51) Int. Cl.: B29C 35/02, B29C 33/76, B29D 23/00

(54) **VERFAHREN ZUR HERSTELLUNG EINES GEFORMTEN HOHLKÖRPERS UND VORRICHTUNG ZUR DURCHFÜHRUNG DES VERFAHRENS**
METHOD FOR PRODUCING A MOLDED HOLLOW BODY, AND DEVICE FOR CARRYING OUT THE METHOD
PROCÉDÉ DE FABRICATION D'UN CORPS CREUX MOULÉ ET DISPOSITIF POUR LA MISE EN UVRE DUDIT PROCÉDÉ

(30) Priorität: 20.12.2017 DE 102017223308
(43) Veröffentlichungstag der Anmeldung: 28.10.2020
(73) Patentinhaber: ContiTech MGW GmbH, 34346 Hann. Münden (DE)
(72) Erfinder: KREIDNER, Harald, 30419 Hannover (DE); BRILL, Hartmut, 30419 Hannover (DE)
(74) Vertreter: Continental Corporation
(86) Internationale Anmeldenummer: PCT/EP2018/077658
(87) Internationale Veröffentlichungsnummer: WO 2019/120666

(56) Entgegenhaltungen:
- DE-A1- 10 354 764
- GB-A- 761 212
- GB-A- 892 654
- GB-A- 1 167 146

## Beschreibung

Die Erfindung betrifft ein Verfahren und eine Vorrichtung zur Herstellung eines geformten Hohlkörpers aus elastomerem Material.

Hohlkörper, die neben ihrer Basisform weitere Formelemente aufweisen, werden häufig mittels einer Vulkanisationsvorrichtung geformt. Dabei weist ein Vulkanisationswerkzeug die Komplementärform des Fertigteils auf. Ein Rohling, beispielsweise ein extrudierter Schlauchendabschnitt, kann in dem Vulkanisationswerkzeug durch Beaufschlagung mit Druckluft an die Wandung des Werkzeugs gepresst und vulkanisiert werden. Auf diese Weise sind beispielsweise elastische Schläuche mit ringförmigen Wulsten herstellbar. Mit einem derartigen Verfahren kann jedoch pro Vulkanisationsvorgang nur jeweils eine begrenzte Anzahl von Teilen hergestellt werden, da jedes Teil einen Innendruck erzeugt, der von der jeweiligen Vulkanisationspresse aufzunehmen ist. Daher entscheidet die Schließkraft der Presse über die Menge der zeitgleich herstellbaren Teile, was die Ausbringung einschränken kann.

GB 1 167 146 A offenbart ein Verfahren gemäß dem Oberbegriff des Anspruchs 1 und eine Vorrichtung gemäß dem Oberbegriff des Anspruchs 4.

Der Erfindung lag daher die Aufgabe zugrunde, ein Verfahren zur Herstellung der genannten Hohlkörper zu schaffen, das eine höhere Ausbringung ermöglicht.

Diese Aufgabe wird durch ein Verfahren gemäß Anspruch 1 gelöst.

Dieses Verfahren erlaubt es, mit einem Vulkanisationsprozess mehrere Hohlkörper auf einmal zu fertigen.

In einer Weiterbildung der Erfindung weist das Verfahren mindestens folgenden weiteren Arbeitsschritt auf, nämlich
c₁) Druckbeaufschlagung der Luftkammern der Dorne mit einem vorbestimmten Innendruck

Die Druckbeaufschlagung kann bei der Abstimmung der Prozesskräfte und der durch die luftdurchlässigen Bereiche der Dorne strömende Luftmenge hilfreich sein.

In einer Weiterbildung der Erfindung weist das Verfahren mindestens folgenden weiteren Arbeitsschritt auf, nämlich
es) Druckanpassung zwischen den Luftkammern der Dorne und dem Autoklaven über einstellbare, in den Dornen angeordnete Druckausgleichselemente.

Auf diese Weise lassen sich die Prozessparameter, beispielsweise Viskosität des elastomeren Materials, und Luftdurchlässigkeit der Wandungsbereiche der Dorne oder die auftretenden Prozesskräfte auch in Abhängigkeit von der Prozesstemperatur gut berücksichtigen und aufeinander abstimmen.

In einer Weiterbildung der Erfindung weist das Verfahren mindestens folgenden weiteren Arbeitsschritt auf, nämlich
f₁) Druckbeaufschlagung der Luftkammern der Dorne, dadurch Durchtritt von Luft durch die luftdurchlässigen Wandungsbereiche aus den Luftkammern zwischen die Dorne und die fertig vulkanisierten Hohlkörper, dabei Bildung eines Luftpolsters zwischen Dornen und Hohlkörpern.

Diese Luftpolster können das Abziehen der Hohlkörper vom Dorn erleichtern.

Die Erfindung betrifft weiter eine Vorrichtung zur Durchführung des oben erläuterten Verfahrens.

Der Erfindung lag dabei die Aufgabe zugrunde, eine Vorrichtung zu schaffen, mit der das eingangs erläuterte Verfahren besonders einfach durchzuführen ist.

Diese Aufgabe wird durch eine Vorrichtung gemäß Anspruch 4 gelöst.

Derartige Dorne haben den Vorteil, dass sie in einem Autoklaven einsetzbar sind, wobei mehrere Dorne gleichzeitig in den Autoklaven einbringbar sind.

Durch die luftdurchlässige Wandung ist Luft, die beim Aufstecken des Rohlings zwischen Dorn und Wand des Rohlings eingeschlossen wird, bei Druckbeaufschlagung des Autoklaven in die korrespondierenden Luftkammern der Dorne pressbar, sodass die Rohlinge an der Komplementärform des jeweiligen Dornes formschlüssig anliegen. Da die fertigen Hohlkörper aus Elastomermaterial sind, lassen sich diese bei vollendeter Vulkanisation und Druckentlastung des Autoklaven vom Dorn wieder abziehen.

In einer Weiterbildung der Erfindung sind die Luftkammern der Dorne mit Druckluft beaufschlagbar.

Nach Abschluss der Vulkanisation und Druckentlastung der Autoklaven kann so Luft durch die entsprechenden luftdurchlässigen Bereiche zwischen den Hohlkörper und den Dorn gepresst werden, wodurch ein Luftpolster zwischen dem Hohlkörper und dem Dorn bildbar ist, so das ein Abziehen der Hohlkörper vom Dorn erleichtert ist.

In einer Weiterbildung der Erfindung weisen die Luftkammern der Dorne einstellbare Druckausgleichselemente auf.

Mittels dieser Druckausgleichselemente ist der Differenzdruck zwischen dem Innendruck in den Luftkammern der Dorne und dem Autoklavendruck einstellbar.

Auf diese Weise ist das Anlegen der Rohlingswand an die Dorne in Abhängigkeit von den sich gegebenenfalls ändernden Prozessparametern einstellbar. Es lässt sich beispielsweise vermeiden, dass das elastomere Material, welches sich bei Beaufschlagung mit Autoklavendruck und Hitze in seiner Viskosität ändert, aufgrund der geregelten Kraft, die auf den Schlauch wirkt, durch die luftdurchlässigen Bereiche der Domwandung in das Innere der Dorne saugbar ist und dabei die luftdurchlässigen Bereiche der Dorne verstopft.

Gemäß der Erfindung sind die Dorne mittels eines 3D-Druckverfahrens hergestellt.

3D-Druckverfahren ermöglichen einen gezielten Aufbau der luftdurchlässigen Bereiche, bei dem auch die Geometrie der Luftdurchlässe beeinflussbar ist. Auch hinterschnittene Bereiche sind möglich. Die Dorne sind einstückig herstellbar, so dass eine Montage von einzelnen Teilen zu einem Gesamtdom nicht erforderlich ist.

Anhand der Zeichnung wird nachstehend ein Ausführungsbeispiel der Erfindung näher erläutert.

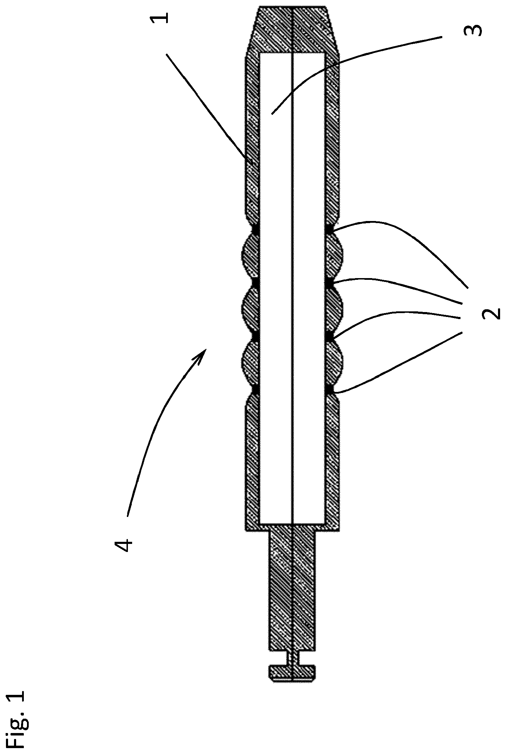

Die Fig. 1 zeigt einen erfindungsgemäßen Dorn 1 mit vier ringförmig umlaufenden Bereichen 2, wobei der gesamte Dorn 1 mittels eines 3D-Druckverfahrens ausgebildet ist.

Der Dorn 1 weist weiter eine Luftkammer 3 auf. Die Luftkammer 3 enthält Luft mit Atmosphärendruck, wobei durch die luftdurchlässigen Bereiche 2 ein Luftaustausch zwischen der Luftkammer 3 und der Umgebung möglich ist.

Der Dorn 1 weist weiterhin eine Formkontur 4 auf.

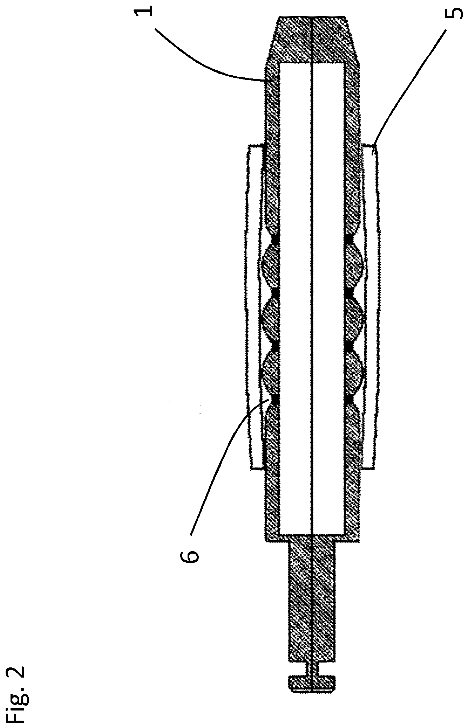

In Figur 2 ist der Dorn 1 mit einem aufgesteckten Schlauchrohling 5 dargestellt. Der Dorn 1 mit Rohling 5 ist in einem hier nicht dargestellten Autoklaven angeordnet. Der Schlauchrohling 5 liegt über der Formkontur 4 des Dorns 1 nicht formschlüssig an, da der Innendruck der Luftkammer 3 und der Druck im nicht gezeigten Autoklaven in dem gezeigten Zustand noch gleich sind. Dadurch ist ein Luftpolster 6 zwischen dem Dorn 1 und dem Rohling 5 eingeschlossen.

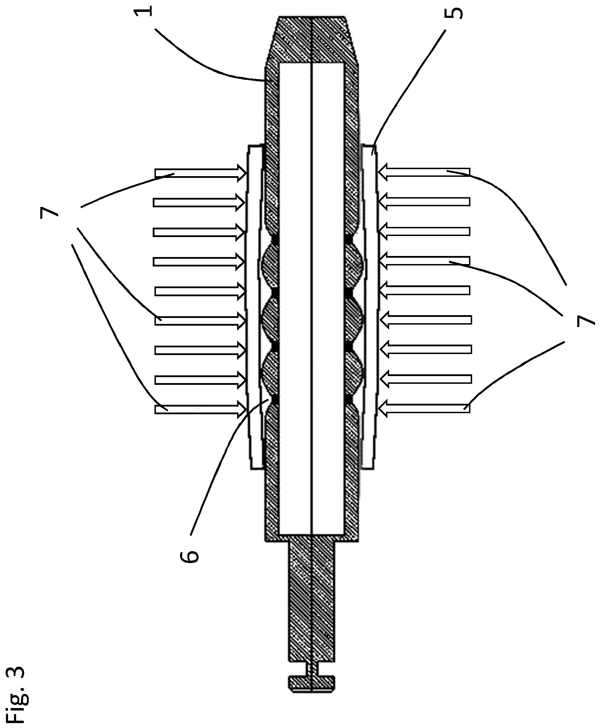

In Figur 3 ist der Dorn 1 mit Rohling 5 und Formkontur 4 in einem Zustand gezeigt, in dem ein durch den nicht gezeigten Autoklaven erzeugter Vulkanisationsdruck, hier durch Pfeile 7 symbolisiert, auf den Rohling 5 einwirkt. Dieser Vulkanisationsdruck 7 soll bewirken, dass der Rohling 5 an die Formkontur 4 des Dorns 1 angepresst wird.

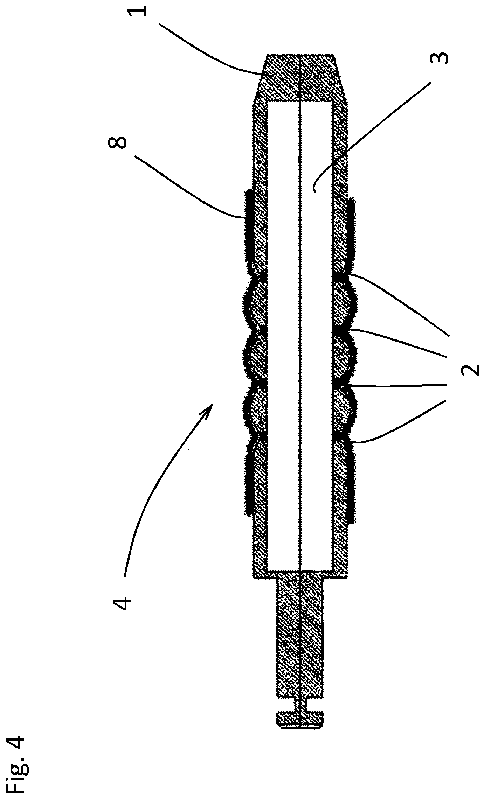

In Fig. 4 ist der Dorn 1 mit einem fertig ausvulkanisierten Hohlkörper 8 gezeigt. Die in dem ursprünglichen, hier nicht mehr vorhandenen Luftpolster vorher eingeschlossene Luft ist durch die luftdurchlässigen Bereiche 2 in die Luftkammer 3 verschoben. Durch die im nicht gezeigten Autoklaven herrschenden Druck- und Temperaturverhältnisse ist der Rohling an die Formkontur 4 des Dornes angepresst und zu dem elastischen Hohlkörper 8 mit vorbestimmter, zur Formkontur 4 des Dornes 1 korrespondierender Form fertiggestellt.

### Bezugszeichenliste

### (Teil der Beschreibung)

- 1: Dorn
- 2: luftdurchlässige Bereiche des Dorns 1
- 3: Luftkammer
- 4: Formkontur des Dorns 1
- 5: Schlauchrohling
- 6: Luftpolster
- 7: Vulkanisationsdruck
- 8: vulkanisierter Hohlkörper

## Patentansprüche

1. Verfahren zur Herstellung von geformten Hohlkörpern (8) aus elastomerem Material, wobei das Verfahren mindestens folgende Arbeitsschritte aufweist, nämlich
a) Aufschieben jeweils eines vorgefertigten Rohlings (5) auf mindestens jeweils einen Dorn (1), wobei der Dorn (1) mindestens einen Bereich mit einer Wandung (2) aufweist, die luftdurchlässig ausgebildet ist und jeder Dorn (1) mindestens eine Luftkammer (3) aufweist, die mit dem mindestens einen Bereich luftdurchlässiger Wandung (2) in Wirkverbindung steht,
b) Einbringen des einen Dorns (1) mit aufgeschobenem Rohling (5) oder mehrere Dorne (1) mit jeweils aufgeschobenem Rohling (5) in einen an sich bekannten Autoklaven,
c₁) Beaufschlagung des Autoklaven mit Druck und Temperatur, wobei Luft (6), die zwischen dem Rohling (5) und dem Dorn 1 oder den Rohlingen (5) und den Dornen (1) eingeschlossen ist, durch die Bereiche luftdurchlässiger Wandung (2) in die jeweilige Luftkammer (3) gepresst wird, dabei Ausvulkanisation der Rohlinge (5),
d) Entlastung des Autoklaven und Abkühlen
e) Entnehmen der Dorne (1) mit fertig vulkanisierten und ausgeformten Hohlkörpern (8)
f₂) Abziehen der Hohlkörper (8) von den Dornen (1),
**dadurch gekennzeichnet, dass** der Dorn (1) mittels eines 3D-Druckverfahrens hergestellt ist.

2. Verfahren nach Anspruch 1, **dadurch gekennzeichnet, dass** das Verfahren mindestens folgenden weiteren Arbeitsschritt aufweist, nämlich
c₂) Druckanpassung zwischen der mindestens einen Luftkammer (3) des mindestens einen Dorns (1) und dem Autoklaven über einstellbare, in dem mindestens einen Dorns (1) angeordnete Druckausgleichselemente.

3. Verfahren nach Anspruch 1 oder 2, **dadurch gekennzeichnet, dass** das Verfahren mindestens folgenden weiteren Arbeitsschritt aufweist, nämlich
f₁) Druckbeaufschlagung der mindestens einen Luftkammer (3) des mindestens einen Dorns (1), dadurch Durchtritt von Luft durch die luftdurchlässigen Wandungsbereiche (2) aus der mindestens einen Luftkammer (3) zwischen den mindestens einen Dorns (1) und den mindestens einen fertig vulkanisierten Hohlkörper (8), dabei Bildung eines Luftpolsters zwischen dem mindestens einen Dorns (1) und dem mindestens einen Hohlkörper (8).

4. Vorrichtung zur Herstellung von geformten Hohlkörpern (8) aus elastomerem Material, wobei die Vorrichtung mindestens einen Dorn (1) aufweist, auf den jeweils ein im wesentlichen schlauchförmig ausgebildetes Rohteil (5) aufschiebbar ist und der mindestens einen Bereich mit einer luftdurchlässigen Wandung (2) und mindestens eine Luftkammer (3) aufweist, wobei der mindestens eine Bereich mit luftdurchlässiger Wandung (2) mit der mindestens einen Luftkammer (3) in Wirkverbindung steht, wobei der mindestens eine Dorn (1) die Komplementärform (4) zur vorbestimmten Endgeometrie des Hohlkörpers (8) aufweist, **dadurch gekennzeichnet, dass** der mindestens eine Dorn (1) mittels eines 3D-Druckverfahrens hergestellt ist.

5. Vorrichtung nach Anspruch 4, **dadurch gekennzeichnet, dass** die mindesten eine Luftkammer (3) des mindestens einen Dorns (1) mit Druckluft beaufschlagbar ist.

6. Vorrichtung nach Anspruch 4 oder 5, **dadurch gekennzeichnet, dass** die mindestens eine Luftkammer (3) des mindestens einen Dorns (1) einstellbare Druckausgleichselemente aufweist.

## Claims

1. Method for producing moulded hollow bodies (8) from an elastomer material, wherein the method comprises at least the following operative steps, specifically:
a) pushing in each case one prefabricated blank (5) onto in each case at least one mandrel (1), wherein the mandrel (1) has at least one region with a wall (2) which is configured to be air-permeable, and each mandrel (1) has at least one air chamber (3) which is operatively connected to the at least one region with an air-permeable wall (2);
b) incorporating the one mandrel (1) having the blank (5) pushed thereon, or a plurality of mandrels (1) having in each case a blank (5) pushed thereon, into an autoclave known per se;
c₁) impinging the autoclave with pressure and temperature, wherein air (6) which is enclosed between the blank (5) and the mandrel (1), or the blanks (5) and the mandrels (1), is pressed through the region with an air-permeable wall (2) into the respective air chamber (3), while fully vulcanizing the blanks (5) in the process;
d) depressurizing the autoclave, and cooling;
e) retrieving the mandrels (1) having completely vulcanized and moulded hollow bodies (8);
f₂) stripping the hollow bodies (8) from the mandrels (1),
**characterized in that** the mandrel (1) is produced by means of a 3D printing method.

2. Method according to Claim 1, **characterized in that** the method comprises at least the following further operative step, specifically:
c₂) adapting the pressure between the at least one air chamber (3) of the at least one mandrel (1) and the autoclave by way of adjustable pressure equalizing elements disposed in the at least one mandrel (1).

3. Method according to Claim 1 or 2, **characterized in that** the method comprises at least the following further operative step, specifically:
f₁) impinging the at least one air chamber (3) of the at least one mandrel (1) with pressure, resulting in the passage of air through the air-permeable wall regions (2) from the at least one air chamber (3) between the at least one mandrel (1) and the at least one completely vulcanized hollow body (8), while forming an air cushion between the at least one mandrel (1) and the at least one hollow body (8) in the process.

4. Device for producing moulded hollow bodies (8) from an elastomer material, wherein the device has at least one mandrel (1) onto which a blank (5) of a substantially tubular configuration is able to be pushed, and which has at least one region with an air-permeable wall (2) and at least one air chamber (3), wherein the at least one region with the air-permeable wall (2) is operatively connected to the at least one air chamber (3), wherein the at least one mandrel (1) has the complementary shape (4) of the predetermined final geometry of the hollow body (8), **characterized in that** the at least one mandrel (1) is produced by means of a 3D printing method.

5. Device according to Claim 4, **characterized in that** the at least one air chamber (3) of the at least one mandrel (1) is able to be impinged with compressed air.

6. Device according to Claim 4 or 5, **characterized in that** the at least one air chamber (3) of the at least one mandrel (1) has adjustable pressure equalizing elements.

## Revendications

1. Procédé de fabrication de corps creux moulés (8) à partir d'un matériau élastomère, dans lequel le procédé présente au moins les étapes suivantes consistant à
a) emmancher respectivement une ébauche préfabriquée (5) sur au moins un mandrin (1) respectivement, le mandrin (1) présentant au moins une zone pourvue d'une paroi (2) qui est réalisée de manière perméable à l'air, et chaque mandrin (1) présentant au moins une chambre à air (3) qui est en relation fonctionnelle avec ladite au moins une zone à paroi (2) perméable à l'air,
b) introduire ledit un mandrin (1) avec l'ébauche (5) emmanchée ou plusieurs mandrins (1) avec respectivement une ébauche emmanchée (5) dans un autoclave connu en soi,
c₁) soumettre l'autoclave à une pression et à une température, dans lequel l'air (6) qui est enfermé entre l'ébauche (5) et le mandrin (1) ou les ébauches (5) et les mandrins (1) est comprimé à travers les zones à paroi (2) perméable à l'air dans la chambre à air (3) respective, avec vulcanisation complète des ébauches (5),
d) détendre l'autoclave et refroidissement,
e) extraire les mandrins (1) avec des corps creux démoulés (8) complètement vulcanisés,
f₂) retirer les corps creux (8) des mandrins (1),
**caractérisé en ce que** le mandrin (1) est fabriqué au moyen d'un procédé d'impression 3D.

2. Procédé selon la revendication 1, **caractérisé en ce que** le procédé présente au moins l'étape supplémentaire suivante consistant à
c₂) adapter la pression entre ladite au moins une chambre à air (3) du au moins un mandrin (1) et l'autoclave par des éléments d'équilibrage de pression réglables, disposés dans ledit au moins un mandrin (1).

3. Procédé selon la revendication 1 ou 2, **caractérisé en ce que** le procédé présente au moins l'étape supplémentaire suivante consistant à
f₁) appliquer une pression à ladite au moins une chambre à air (3) du au moins un mandrin (1), ce qui implique un passage d'air à travers les zones de paroi (2) perméables à l'air à partir de ladite au moins une chambre à air (3) entre ledit au moins un mandrin (1) et ledit au moins un corps creux (8) complètement vulcanisé, avec formation d'un coussin d'air entre ledit au moins un mandrin (1) et ledit au moins un corps creux (8).

4. Dispositif de fabrication de corps creux moulés (8) à partir d'un matériau élastomère, dans lequel le dispositif présente au moins un mandrin (1) sur lequel respectivement une ébauche (5) de forme substantiellement tubulaire peut être emmanchée et qui présente une zone pourvue d'une paroi (2) perméable à l'air et au moins une chambre à air (3), dans lequel ladite au moins une zone à paroi (2) perméable à l'air est en relation fonctionnelle avec ladite au moins une chambre à air (3), dans lequel ledit au moins un mandrin (1) présente la forme complémentaire (4) à la géométrie finale prédéterminée du corps creux (8), **caractérisé en ce que** ledit au moins un mandrin (1) est fabriqué au moyen d'un procédé d'impression 3D.

5. Dispositif selon la revendication 4, **caractérisé en ce que** ladite au moins une chambre à air (3) du au moins un mandrin (1) peut être soumis à de l'air comprimé.

6. Dispositif selon la revendication 4 ou 5, **caractérisé en ce que** ladite au moins une chambre à air (3) du au moins un mandrin (1) présente des éléments d'équilibrage de pression réglables.
